# EUROPEAN PATENT APPLICATION

(11) **EP 2 538 643 A1**
(43) Date of publication of application: **26.12.2012**
(21) Application number: 12460033.9
(22) Date of filing: 21.06.2012
(51) Int. Cl.: H04M 3/42

(54) **Method and system for setting up phone calls in a telephone network**

(30) Priority: 21.06.2011 PL 39538411
(71) Applicant: Telekomunikacja Polska S.A., 00-105 Warszawa (PL)
(72) Inventor: Krasinska, Dorota, 02-495 Warszawa (PL); Stolarek, Piotr, 26-415 Klwow (PL)
(74) Representative: Piotrowicz, Alicja

(57) **Abstract**

The calling signal, generated in a telephone set having a "j" classified number (Zⱼ), where natural number j = 1, 2, ..., n, is transcoded in the "j" encoder/decoder (K/Dⱼ) to the calling signal of a "k" virtual number, which is sent to a telephone set having an "i" non-classified fixed digit number (Nᵢ), where natural number i = 1, 2, ..., m. Following completion of the call with the telephone set having the "i" non-classified number, only the "k" virtual number, instead of the actual "j" classified number (Zⱼ), is shown on its display. The subscriber of a telephone set having the "i" non-classified number (Nᵢ) does not recognise the original data on the telephone set having the "j" classified number (Zⱼ). Electrical signals containing settings that enable single or multiple connections of a telephone set having an "i" non-classified number (Nᵢ) with a telephone set having a "j" classified number (Zⱼ), within time periods determined by the telephone exchange operator, are generated in the programming device (P).

## Description

The present invention relates to a method for interactive setting up of telephone calls in a telephone network and a system for interactive setting up of telephone calls in a telephone network.

Polish patent description PL 187033 B1 discloses a method of administering additional services in a communication network, as well as a service unit controlling the additional services and a service switching unit for the linking of additional services in a telecommunication network. It consists in receiving of an initiating messages by the service control unit and comparing their contents with protocols implemented by the service switching unit, and then, depending on the result of comparison, granting of a specific service.

Documentation of Polish patent application PL 352001 Al describes a method for the setting up of telephone calls on the grounds of a virtual telephone number and IVR system. A subscriber having a classified phone number is accessible under the virtual telephone number when the caller, after this virtual telephone number has been dialled, is connected through an exchange with the IVR system, where a voice message is played and the caller can dial the classified telephone number by means of DTMF tone buttons to complete the call.

American patent description US 7065188 B1 discloses a system and method of individual dialog, based on a list of specific options in interactive voice answering system, in which the caller, after pre-recorded messages have been listened to, is able to reach the information of a specific service being searched for.

The point of the interactive method of setting up telephone calls in a telephone network, according to the invention, is that the calling signal generated in a telephone set, having a "j" classified fixed digit number, where natural number j = 1, 2, ... , n, is being sent, through the call handling controller of an exchange, to a telephone set having an "i" non-classified fixed digit number, where natural number i = 1, 2, ... , m. In the "j" encoder/decoder of an exchange, the call signal generated in the telephone set having the "j" classified fixed digit number is transcoded into the call signal of the "k" virtual fixed digit number, where natural number k = 1, 2, ... , 1, where the call signal of the "k" virtual fixed digit number is being sent to the telephone set having the "i" non-classified fixed digit number. After completion of a call with the telephone set having an "i" non-classified fixed digit number, electrical signals representing dates, hours, minutes and seconds of specific performed connections are recorded in the register of calls completed in the exchange, and on the display of the telephone set having the "i" non-classified fixed digit number, the "k" virtual fixed digit number is shown.

In a situation when, following the sending of a call signal of the "k" virtual fixed digit number, the connection of a telephone set having a "j" classified fixed digit number with a telephone set having an "i" non-classified fixed digit number fails, the electrical signals representing dates, hours, minutes and seconds of the time when realisation of such connections has failed are recorded in the failed calls register of an exchange.

At the subsequent call-back attempt from a telephone set having an "i" non-classified fixed digit number following the failed call, the telephone set having an "i" non-classified fixed digit number becomes connected with the telephone set having a "j" classified fixed digit number, and the display of the telephone set having an "i" non-classified fixed digit number shows the "k" virtual fixed digit number and not the actual "j" classified fixed digit number.

Electrical connections between telephone sets having non-classified fixed digit numbers and telephone sets having classified fixed digit numbers are analysed in an analyser of telephone calls, and each electrical signal representing an unauthorized call is sent to a signalling monitor, which provides information about the call status violation.

Preferably, a programming device generates electrical signals containing settings, by means of which the second and every subsequent connection of a telephone set having a "j" classified fixed digit number with a telephone set having an "i" non-classified fixed digit number is accomplished.

Preferably, a programming device generates electrical signals containing settings, by means of which only a single connection of a telephone set having an "i" non-classified fixed digit number with a telephone set having a "j" classified fixed digit number is accomplished.

Preferably, a programming device generates electrical signals containing settings, by means of which connections of a telephone set having an "i" non-classified fixed digit number with a telephone set having a "j" classified fixed digit number are accomplished only at specified hours of a day.

Preferably, a programming device generates electrical signals containing set values, by means of which connections of a telephone set having an "i" non-classified fixed digit number with a telephone set having a "j" classified fixed digit number are accomplished within a time period, which starts once the first connection of the telephone set having a "j" classified fixed digit number with the telephone set having an "i" non-classified fixed digit number is done, and this ends at a moment in time unequivocally determined by the operator of the telephone exchange.

The essence of the system for interactive setting up of telephone calls in a telephone network, according to the invention, is that the multifunctional terminal, programming device and controller of a call being set up are connected to the call handling controller. The "m" number of telephone sets, having non-classified numbers, and, through n encoders/decoders and n telephone sets having classified numbers are connected to the call set-up controller, while the input of the connection analyser is connected to the output of the call set-up controller. The signalling monitor, register of failed connections and register of completed connections are connected to the outputs of the connection analyser.

The essential, advantageous effects of the method and system utilisation for interactive call setting up in a telephone network, according to the invention, in relation to the prior art, consist in that the setting up of an interactive telephone call is suitable for use both in wireless and in wired telephone networks. Furthermore, it enables quick and effective provision of information about the occurrence of specific situations when performing return calls to a telephone set having classified number. In particular, it precludes connection of a telephone set having an anonymous number to a telephone set having a classified number.

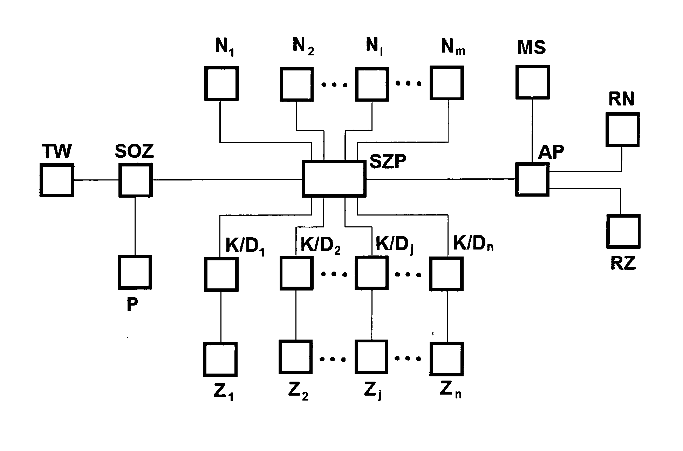

The embodiment of the system for interactive setting up of telephone calls in a telephone network is shown in the figure in the form of a block diagram.

In the embodiment of the interactive method of setting up telephone calls in a telephone network, according to the invention, the calling signal generated in a telephone set having the "j" classified fixed digit number Zⱼ, where natural number j = 1, 2, ..., n, is being sent through the call handling controller SOZ of the telephone exchange to a telephone set having the "i" non-classified fixed digit number Nᵢ, where natural number i = 1, 2, ..., m, while in the "j" encoder/decoder K/Dᵢ of the telephone exchange, the call signal generated in a telephone set having the "j" classified fixed digit number Zⱼ is transcoded into the call signal of the "k" virtual fixed digit number, where natural number k = 1, 2, ..., 1, where the call signal of the "k" virtual fixed digit number is being sent to a telephone set having the "i" non-classified fixed digit number Nᵢ. After completion of the call with a telephone set having the "i" non-classified fixed digit number Nᵢ, electrical signals representing dates, hours, minutes and seconds of specific performed connections are recorded in the completed calls register RZ in the exchange, and on the display of the telephone set having the "i" non-classified fixed digit number Nᵢ, the "k" virtual fixed digit number is shown. In the situation when, following the sending of a call signal of the "k" virtual fixed digit number, connection of a telephone set having the "j" classified fixed digit number Zⱼ with a telephone set having the "i" non-classified fixed digit number Nᵢ fails, the electrical signals representing dates, hours, minutes and seconds of the time when realisation of such connections failed are recorded in the failed calls register RN of the telephone exchange.

When attempting to call back from a telephone set having the "i" non-classified fixed digit number Nᵢ, following a non-answered call, the telephone set having the "i" non-classified fixed digit number Nᵢ gets connection with a telephone set having the "j" classified fixed digit number Zⱼ, and the "k" virtual fixed digit number, instead of the real "j" classified fixed digit number Zⱼ, is shown on the display of the telephone set having the "i" non-classified fixed digit number Nᵢ.

Electrical connections between telephone sets having non-classified fixed digit numbers and telephone sets having classified fixed digit numbers, are analysed in an analyser AP of telephone calls, and each electrical signal representing an unauthorised call is sent to the signalling monitor MS, which provides information about the call status violation. Such an unauthorised call is an electrical connection accomplished in the attempt of making a return call between a telephone set a having non-classified fixed digit number and a telephone set having a classified fixed digit number.

For new telephone sets with keypads, subsequent classified fixed digit numbers are being introduced, and previously existing classified fixed digit numbers of telephone sets are being changed or deleted. Furthermore, the keypad is used for the updating of a programming device P and the call set-up controller SZP settings, as well as changing the codes of the encoder/decoder K/Dⱼ and the transferring of proper telephone network operation data. The validity time period of a virtual number is determined by means of settings. Parameters of settings are established on the grounds of data contained in the operating instruction of a telephone set having the "j" classified fixed digit number Zⱼ.

In the specific embodiment of the method, according to the invention, electrical signals containing settings, by means of which the second and each subsequent connection of a telephone set having the "j" classified fixed digit number Zⱼ with a telephone set having the "i" non-classified fixed digit number Nᵢ are being accomplished, are generated in the programming device P.

In the subsequent embodiment of the method according to the invention, electrical signals containing settings, by means of which only a single connection of a telephone set having the "i" non-classified fixed digit number Nᵢ with a telephone set having the "j" classified fixed digit number Zⱼ is being accomplished, are generated in the programming device P.

In another embodiment of the method according to the invention, electrical signals containing settings, by means of which connections of a telephone set having the "i" non-classified fixed digit number Nᵢ with a telephone set having the "j" classified fixed digit number Zⱼ are being accomplished only at specific hours of a day, are generated in the programming device P.

In the subsequent embodiment of the method according to the invention, electrical signals containing settings, by means of which connections of a telephone set having the "i" non-classified fixed digit number Nᵢ with a telephone set having the "j" classified fixed digit number Zⱼ are being accomplished within a time period that starts with the first successful connection of a telephone set having the "j" classified fixed digit number Zⱼ with a telephone set having the "i" non-classified fixed digit number Nᵢ and ends at a moment in time unequivocally determined by the telephone exchange operator, are generated in the programming device P.

In the embodiment of a system for interactive setting up of telephone calls in a telephone network, according to the invention, the multifunctional terminal TW constitutes a multi-input device, which contains input interfaces and a keypad. Other telephone networks are connected to input interfaces, while meeting all technical requirements concerning connection reliability and safety of transferred data. The multifunctional terminal TW is connected to the call handling controller SOZ, where, to the aforementioned call handling controller SOZ, the programming device P is connected.

The output of the call handling controller SOZ is connected to the call set-up controller SZP, where to the aforementioned call set-up controller SZP m telephone sets, having non-classified N₁, N₂, ..., Nₘ numbers, as well as n encoders/decoders K/D₁, K/D₂, ..., K/Dₙ, are connected. Each of the n encoders/decoders K/D₁, K/D₂, ..., K/Dₙ are connected with one of the n telephone sets having classified numbers Z₁, Z₂, ..., Zₙ.

The input of the connection analyser AP is connected to the output of the call set-up controller SZP, while to the outputs of the connection analyser AP, the signalling monitor MS, failed connections register RN, as well as completed connections register RZ are connected.

By means of the method and the system for interactive setting up of telephone calls in a telephone network, according to the invention, and following generation of settings in a programming device P, the return call of a telephone set having the "i" non-classified fixed digit number Nᵢ with a telephone set having the "j" classified fixed digit number Zⱼ is being accomplished despite the fact that the user of the telephone set having the "i" non-classified number Nᵢ does not recognise the "j" classified fixed digit number Zᵢ of the telephone set, but only the virtual number of the classified telephone set. This return call of a telephone set having the "i" non-classified fixed digit number Nᵢ with a telephone set having the "j" classified fixed digit number Zⱼ is being accomplished when, on the initiative of the user of a telephone set having the "j" classified fixed digit number Zⱼ a connection of telephone set having "j" classified fixed digit number Zⱼ with a telephone set having the "i" non-classified fixed digit number Nᵢ has been completed, and the settings have been generated in the programming device P, which unequivocally determine the performance of connections only at specified hours of the day and only within a specified time period lasting a specified number of days, counted starting from the day on which on the initiative of the user of a telephone set having the "j" classified fixed digit number Zⱼ, a connection of a telephone set having the "j" classified fixed digit number Zⱼ with a telephone set having the "i" non-classified fixed digit number Nᵢ has been completed.

The method and system for interactive setting up of telephone calls in a telephone network, according to the invention, is suitable for use particularly in such telephone networks in which an increased level of incorrect telephone call detectability is required.

Whereas the method and system for interactive setting up of telephone calls in a telephone network, according to the invention, has been defined with six claims, presented in the form of a specific embodiment in the description of the invention and presented in a figure, it is obvious for those skilled in the art of methods and systems for interactive setting up of telephone calls in a telephone network that the data contained in them, concerning the method and system for interactive setting up of telephone calls in a telephone network, cannot be interpreted as limiting the inventive idea only by the data presented.

## Claims

1. A method for interactive setting up of telephone calls in a telephone network, comprising the processing of electrical signals in its call handling controller, **characterized in that** the calling signal generated in a telephone set having a "j" classified fixed digit number (Zⱼ), where natural number j = 1, 2, ..., n, is being sent through the call handling controller (SOZ) of the telephone exchange to a telephone set having an "i" non-classified fixed digit number (Nᵢ), where natural number i = 1, 2, ..., m, while in the "j" encoder/decoder (K/Dⱼ) of the telephone exchange, the call signal generated in a telephone set having a "j" classified fixed digit number (Zⱼ) is transcoded into the call signal of a "k" virtual fixed digit number, where natural number k = 1, 2, ..., 1, the aforementioned calling signal of the "k" virtual fixed digit number is sent to a telephone set having an "i" non-classified fixed digit number (Nᵢ), and following completion of the connection with a telephone set having an "i" non-classified fixed digit number (Nᵢ), electrical signals representing the dates, hours, minutes and seconds at which specific connections are being done are recorded in the completed calls register (RZ) of the telephone exchange, and the "k" virtual fixed digit number is shown on the display of the telephone set having an "i" non-classified fixed digit number (Nᵢ), while in the case after the sending of a calling signal having a "k" virtual fixed digit number, the connection of a telephone set having a "j" classified fixed digit number (Zⱼ) with a telephone set having an "i" non-classified fixed digit number (Nᵢ) fails, electrical signals representing the dates, hours, minutes and seconds at which completion of such connections failed are being recorded in the failed calls register (RN) of the telephone exchange, while during the attempt of a call back from the telephone set having an "i" non-classified fixed digit number (Nᵢ) following a non-answered call, the telephone set having an "i" non-classified fixed digit number (Nᵢ) gets a connection with the telephone set having a "j" classified fixed digit number (Zⱼ), and the display of the telephone set having an "i" non-classified fixed digit number (Nᵢ) shows the "k" virtual fixed digit number instead of the actual "j" classified fixed digit number (Zⱼ), electrical connections between telephone sets having non-classified fixed digit numbers and telephone sets having classified fixed digit numbers are analysed in the telephone connections analyser (AP), and each electrical signal representing an unauthorised connection is sent to the signalling monitor (MS), which provides information about the violation of the connection status.

2. The method according to claim 1, **characterized in that** the programming device (P) generates electrical signals containing settings, by means of which the second and every subsequent connection of a telephone set having a "j" classified fixed digit number (Zⱼ) with a telephone set having an "i" non-classified fixed digit number (Nᵢ) is accomplished.

3. The method according to claim 1 or 2, **characterized in that** the programming device (P) generates electrical signals containing settings, by means of which only a single connection of a telephone set having an "i" non-classified fixed digit number (Nᵢ) with a telephone set having a "j" classified fixed digit number (Zⱼ) is accomplished.

4. The method according to claim 1, **characterized in that** the programming device (P) generates electrical signals containing settings, by means of which connections of a telephone set having an "i" non-classified fixed digit number (Nᵢ) with a telephone set having a "j" classified fixed digit number (Zⱼ) are accomplished only at specified hours of the day.

5. The method according to claim 1, **characterized in that** electrical signals containing settings, by means of which connections of a telephone set having an "i" non-classified fixed digit number (Nᵢ) with a telephone set having a "j" classified fixed digit number (Zⱼ) are being accomplished within a time period that starts with the first successful connection of a telephone set having a "j" classified fixed digit number (Zⱼ) with a telephone set having an "i" non-classified fixed digit number (Nᵢ) and ends at a moment in time unequivocally determined by the telephone exchange operator, are generated in the programming device (P).

6. A system for interactive setting up of telephone calls in a telephone network, comprising the programming device and encoders/decoders, **characterized in that** the multifunction terminal (TW), programming device (P) and call setting up controller (SZP) are connected to a call handling controller(SOZ), m telephone sets having non-classified numbers (N₁, N₂, ..., Nₘ), and through n encoders/decoders (K/D₁, K/D₂, ..., K/Dₙ), n telephone sets having classified numbers (Z₁, Z₂, ..., Zₙ) are connected to the aforementioned call setting up controller (SZP), while the input of an connection analyser (AP) is connected to the output of the call setting up controller (SZP), and the signalling monitor (MS), failed call register (RN) and completed call register (RZ) are connected to the outputs of the call analyser (AP).
